# EUROPEAN PATENT SPECIFICATION

(11) **EP 3 678 904 B1**
(45) Date of publication and mention of the grant of the patent: **10.11.2021**
(21) Application number: 18785433.6
(22) Date of filing: 06.09.2018
(51) Int. Cl.: B60T 7/12, B60T 8/17, B60T 8/32

(54) **CONTROL METHOD OF A BRAKING SYSTEM OF AT LEAST ONE RAILWAY VEHICLE**
VERFAHREN ZUR STEUERUNG EINER BREMSANLAGE VON MINDESTENS EINEM SCHIENENFAHRZEUG
PROCÉDÉ DE COMMANDE D'UN SYSTÈME DE FREINAGE D'AU MOINS UN VÉHICULE FERROVIAIRE

(30) Priority: 07.09.2017 IT 201700100433
(43) Date of publication of application: 15.07.2020
(73) Proprietor: Faiveley Transport Italia S.p.A., 10045 Piossasco (TO) (IT)
(72) Inventor: IMBERT, Luc, 10128 Torino (IT); FREA, Matteo, 10060 Cantalupa (TO) (IT)
(74) Representative: Deambrogi, Edgardo
(86) International application number: PCT/IB2018/056792
(87) International publication number: WO 2019/049055

(56) References cited:
- JP-A- 2001 286 009
- US-A1- 2013 338 860
- US-A1- 2014 246 282

## Description

### Technical field

The present invention is, in general, in the field of control methods for a railway vehicle; in particular, the invention relates to a control method of a braking system of at least one railway vehicle.

### Prior art

In most existing railway vehicle braking systems and methods, the activation and control of braking systems, whether dependent or independent of adhesion, are operated independently of each other without any specific order or rule.

These systems do not provide for centralization of the collection, analysis and management of the various braking options.

In some recent cases, however, a centralization of the various braking options based on the adhesion coefficient has been used. This approach, however, does not consider all the possible interactions of factors that may affect the deceleration of the railway vehicle.

In other recent cases, a braking force is generated from an estimate of a desired braking force and an applied braking force. In this case, these estimates do not take into account any non-linear and atmospheric conditions. Therefore, the deceleration management will be sub-optimal.

For example, WO2016207078A2 describes a braking system wherein is provided a braking target, an accelerometer to determine braking power from deceleration and to adapt the current braking force at the braking force target. Only an individual estimate of the braking force of each component is described in this document.

In US9126605B2 a braking method is described for a railway vehicle which provides for a loss-of-adhesion signal and respective adhesion-type brakes. This document only describes the possibility of increasing the braking force on the axles where adhesion is available.

Furthermore, US9254830B2 only describes the generation of a braking force for the brake cylinder based on data from an accelerometer and wheel speed.

US 2013/338860 A1 discloses a method for controlling an emergency brake device of a rail vehicle or rail vehicle train.

The aforesaid systems and methods do not optimize braking behavior as they do not present any general point of view, they do not take into account wear and the effectiveness of brake influencing means. The aforesaid disadvantages thus lead to the non-utilization of the full braking potential of the railway vehicle and to the lack of the option of applying countermeasures to improve the braking of the railway vehicle.

As a result, in known systems, longer than expected braking distances frequently occur as a result of excessive wear on the brake influencing means and, in particular, as a result of poor braking performance, which may lead to accidents.

### Summary of the invention

One object of the present invention is to propose a control method of a braking system of at least one railway vehicle which allows the use of the full potential of the braking system of the railway vehicle and which also allows the option of applying countermeasures to improve the braking of the railway vehicle. In this way, braking distances may be reduced and therefore also accidents.

In summary, to obtain this result, the control method of a braking system of at least one railway vehicle is based on the analysis of a desired target, i.e. the deceleration of the railway vehicle, so as to ensure a more complete and reliable approach to braking.

The aforesaid and other objects and advantages are achieved, according to an aspect of the invention, by a control method of a braking system of at least one railway vehicle having the characteristics defined in claim 1. Preferred embodiments of the invention are defined in the dependent claims.

### Brief description of the drawings

The functional and structural characteristics of some preferred embodiments of a control method of a braking system of at least one railway vehicle according to the invention will now be described. Reference is made to the accompanying drawings, wherein:
- figure 1 illustrates by way of example a system adapted to implement a control method of a braking system of at least one railway vehicle according to the invention;
- figure 2 illustrates a block diagram of the internal structure of an adhesion management module of the system in figure 1; and
- figure 3 illustrates a block diagram of the inner structure of an optimal adhesion control module of the adhesion management module in figure 2.

### Detailed Description

The control method of a braking system of at least one railway vehicle comprising a plurality of deceleration influencing means 2, in a first embodiment, comprises the step of calculating a deceleration difference between a target deceleration and at least an estimated effective deceleration, and the step of selecting at least one influencing means from among the plurality of deceleration influencing means 2 according to the deceleration difference and the decision factors listed hereinafter.

The decision factors may be a mission factor to indicate that the target deceleration corresponds to service braking or emergency braking, or that a stretch traveled by the railway vehicle prevents the use of a particular deceleration influencing means, advantage and disadvantage factors inherent to each deceleration influencing means that are indicative of positive and negative operating characteristics, field response factors indicative of the environmental conditions surrounding at least one railway vehicle and system state factors indicative of the current state of the braking system.

System state factors that are indicative of the current state of the braking system may comprise, among others, a factor indicative of the wear state of the braking system and/or a factor indicative of the current activation level of each deceleration influencing means 2.

The control method of a braking system of at least one railway vehicle further comprises the step of controlling the at least one influencing means selected according to the difference in deceleration and said decision factors, which, as already indicated above, may be a mission factor, advantage and disadvantage factors inherent to each deceleration influencing means, field response factors and braking system state factors.

Each deceleration influencing means 2 may be a material injection device adapted to modify positively or negatively the friction coefficient between wheel and rail, and/or a brake acting on a disc or axle of the electro-pneumatic, electrodynamic, mechanical, hydraulic type, or a combination of these, and/or a brake acting on wheels of the electropneumatic, mechanical, hydraulic type and/or a brake acting on the rail, and/or a wheel slide protection, WSP, and/or an eddy current brake.

Obviously, the means for triggering a further deceleration of the train relative to its natural deceleration (air and rolling resistance and in some cases rail slope) are numerous. Some deceleration influencing means may be connected to the same point of contact between the wheel and the rail, others may allow the properties of the points of contact between the wheel and the rail (also known as the cleaning effect) to be changed, thus allowing for greater deceleration. Other deceleration influencing means allow the contact properties of the local contact point to be changed or allow the properties of the wheel/rail contact points to be changed and an independent contact point to be added.

Further deceleration influencing means could be completely independent of the point of contact between wheel and rail.

The aforesaid deceleration influencing means comprised in the deceleration control system may in effect be controlled according to their operating characteristics, both positive and negative, and/or according to the environmental conditions surrounding the railway vehicle. For example, the environmental conditions may comprise an adhesion value between the wheels of the railway vehicle and the rail.

By way of example, to select the appropriate deceleration influencing means, a simple table showing the main characteristics of each deceleration influencing means may be used.

In effect, the advantages and disadvantages of each deceleration influencing means are well known and may be weighed together, so as to activate the most suitable deceleration influencing means according to the two aforesaid main aspects.

As mentioned above, at least one deceleration influencing means may be controlled depending on whether the target deceleration corresponds to service braking or emergency braking.

The most relevant criteria may be the deceleration and the associated safety level for braking, in particular, the latter to avoid wear on the brake system.

The estimated effective deceleration may be measured by at least a first sensor means and/or estimated as a function of the speed of at least one wheel of the railway vehicle measured by a second sensor means.

In particular, the first sensor means may be an accelerometer and the second sensor means may be an angular speed sensor.

Obviously, to estimate the effective deceleration, the effective speed may be converted into an effective acceleration, for example, by calculating the derivative of the vehicle's speed.

The target deceleration, on the other hand, may be imparted by the driver by operating a predetermined brake lever or by a command given by an automatic train control derived from a signal, for example, a signal indicating the need to impose a lower speed than the current one on the railway vehicle.

Moreover, the step of controlling the at least one influencing means selected according to the difference in deceleration and the following decision factors may comprise the activation and deactivation of the selected influencing means. Alternatively, or in addition, it may also comprise adjusting the actuation intensity of the influencing means selected. For example, a material injection device may be activated, deactivated, and/or the amount of material thereby injected may be controlled.

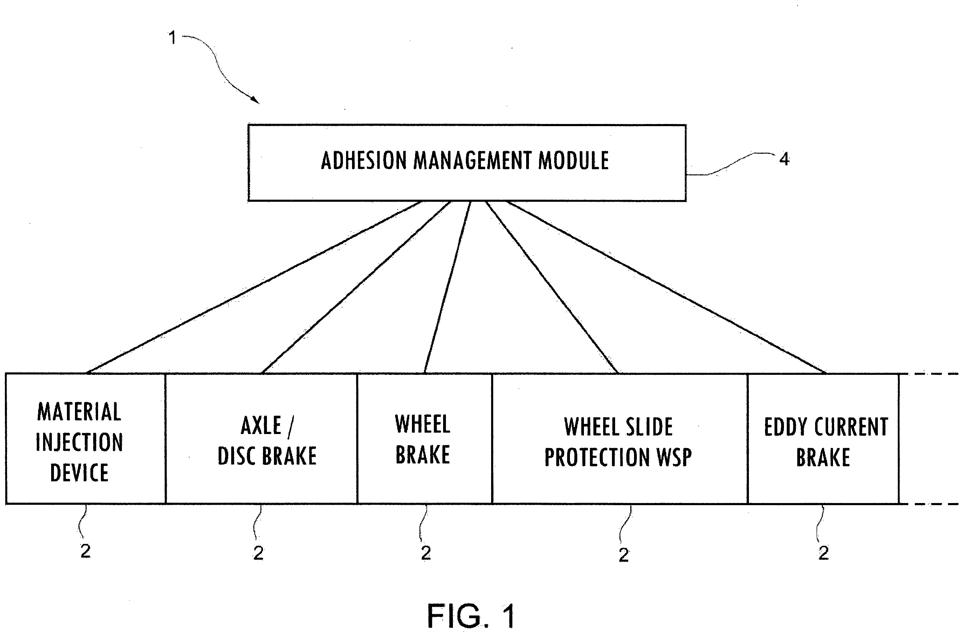

Referring now to figure 1, a system 1 arranged to implement the method described above is illustrated by way of example.

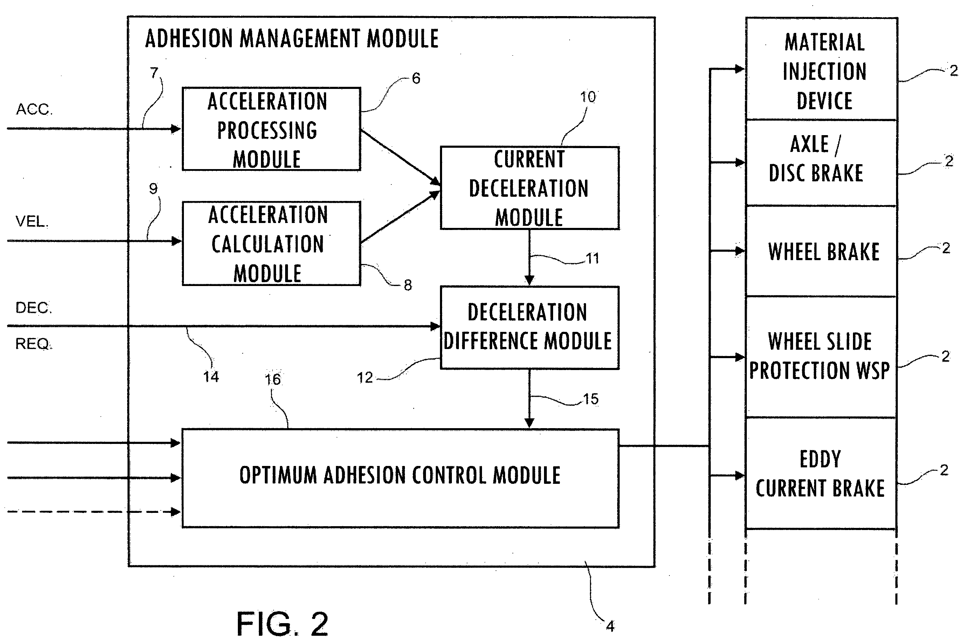

Such system 1 may comprise, as illustrated in figure 2, an adhesion management module 4 which comprises an acceleration processing module 6 and an acceleration calculation module 8. The acceleration processing module 6 receives the train's acceleration 7 by using a sensor, such as an accelerometer. The acceleration calculation module 8 receives the speed 9 of the train wheels and derives the acceleration therefrom. Both modules each produce an estimate of the train's deceleration, which will be compared with each other. Such deceleration estimates may then be corrected in a further current deceleration module 10.

The current deceleration 11 of the train will be sent to a deceleration difference module 12. This module also receives the deceleration request 14 which may, for example, come from different sources, such as, among others, a BCU (brake control unit), a TCMS, a digital signal, etc.

The deceleration difference module then transmits the difference 15 between the deceleration request and the current deceleration to an optimal adhesion control module 16. The value of the difference between the deceleration request and the current deceleration may be positive or negative.

The optimum adhesion control module may decide which deceleration influencing means to activate based on, for example, the current state of the braking devices, the deceleration difference sign and amplitude and other signals.

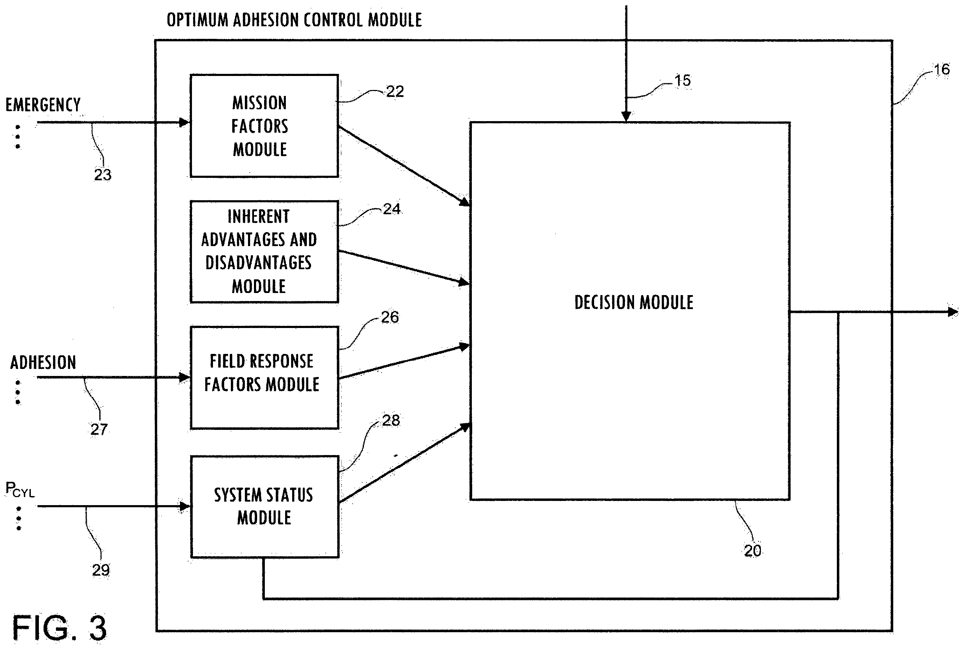

As illustrated in figure 3, the optimal adhesion control module 16 may comprise five modules:
- a mission factors module 22 allowing the messages 23 coming from a signaling system or from the TCMS to be understood; an example could be the safety cycle (Emergency) and another example could be an MTB inhibition signal due to the particularities of the section of the route on which the railway vehicle is traveling;
- a module of inherent advantages and disadvantages 24, which may comprise the table wherein are listed the characteristics of the various deceleration influencing means. This module may also integrate past use preferences of different means.
- a module of field response factors 26 analyzing the information 27 representing the state of the interfaces between the train and its surrounding environment, e.g. the state of the rail. This module may also propose suggestions on how to improve deceleration. The adhesion value and a macroscopic description of the surrounding environment may be examples of input that may be provided to this module;
- a system state module 28 that allows one to understand the current system state and to compare it with the deceleration request commands 29, to understand any deviation between the command sent and the effective measured values. This module may also be used to calculate the remaining flexibility that the system has to offer. Other inputs may include the speed and the load of the train; the speed may influence the adhesion available between the wheel and the rail and the load may influence the force to be exerted in order to obtain a constant braking force regardless of the load. State variables may integrate one or more variables. Some examples may be:
   - Pcyl;
   - Speed;
   - Sliding;
   - Load;
   - Availability of sand;
   - Wear state.

The aforesaid four modules, comprised in the optimal adhesion control, and the deceleration difference value may be used in a decision module 20 which generates the activation commands of the various deceleration influencing means.

Clearly, the system described above represents one of the possible control systems that could implement the control method of a braking system of at least one railway vehicle of the invention; however, the invention is not intended to be limited to this embodiment.

Advantageously, in the method and in the system described above, the control loop of a braking system of at least one railway vehicle is closed on the desired effect, i.e. deceleration. Thus, a control is put in place to ensure a more comprehensive approach.

Various aspects and embodiments of a system and of a control method of a braking system of at least one railway vehicle according to the invention have been described. It is understood that each embodiment may be combined with any other embodiment. The invention, moreover, is not limited to the described embodiments, but may vary within the scope defined by the accompanying claims.

## Claims

1. A control method of a braking system of at least one railway vehicle that comprises a plurality of deceleration influencing means (2), including the steps of:
- calculating a deceleration difference between a target deceleration and at least an estimated effective deceleration;
- selecting at least one deceleration influencing means between said plurality of deceleration influencing means (2) depending on the deceleration difference and the following decision factors:
a) a mission factor indicative of the fact that the target deceleration corresponds to service braking or emergency braking, or that a section traveled by the railway vehicle prevents the use of a particular deceleration influencing means (2);
b) advantage and disadvantage factors inherent to each deceleration influencing means, which are indicative of operating characteristics that may be both positive and negative;
c) field response factors indicative of the environment conditions surrounding the at least one rail vehicle;
d) system state factors indicative of the current state of the braking system;
- controlling the selected at least one deceleration influencing means according to the deceleration difference and the following decision factors:
a) a mission factor indicative of the fact that the target deceleration corresponds to service braking or emergency braking, or that a section traveled by the railway vehicle prevents the use of a particular deceleration influencing means (2);
b) advantage and disadvantage factors inherent to each deceleration influencing means, which are indicative of positive and negative operating characteristics;
c) field response factors indicative of the environment conditions surrounding the at least one rail vehicle;
d) system state factors indicative of the current state of the braking system.

2. A control method of a braking system of at least one railway vehicle according to claim 1, wherein each deceleration influencing means (2) is a material injection device adapted to modify the friction coefficient between wheel and rail, and/or a brake acting on disc or axle of the electro-pneumatic, electrodynamic, mechanical, hydraulic type, or a combination of these, and/or a brake acting on wheels of the electropneumatic, mechanical, hydraulic and/or a brake acting on the rail, and/or wheel slide protection, WSP, and/or an eddy current brake.

3. A control method of a braking system of at least one railway vehicle according to any one of the preceding claims, wherein the step of controlling the selected at least one deceleration influencing means according to the deceleration difference and at least one of said decision factors comprises the activation and deactivation of the selected deceleration influencing means and/or the adjustment of the activation intensity of the selected influencing means.

4. A control method of a braking system of at least one railway vehicle according to any one of the preceding claims, wherein the estimated effective deceleration is detected by at least one first sensor means and/or estimated according to the speed of at least one wheel of the railway vehicle that is detected by a second sensor means.

5. A control method of a braking system of at least one railway vehicle according to claim 4, wherein the first sensor means is an accelerometer and the second sensor means is an angular speed sensor.

6. A control method of a braking system of at least one railway vehicle according to any one of the preceding claims, wherein at least one of said field response factors indicative of the environmental conditions surrounding the at least one rail vehicle is a factor indicative of the adhesion value between the railway vehicle wheels and the rail.

7. A control method of a braking system of at least one railway vehicle according to any one of the preceding claims, wherein at least one of said system state factors indicative of the current state of the braking system is a factor indicative of the braking system wear and/or a factor indicative of the current activation level of each deceleration influencing means (2).

8. A control method of a braking system of at least one railway vehicle according to any one of the preceding claims, wherein the target deceleration is a value given by the driver through the actuation of a predetermined brake lever or a value corresponding to a command provided by an automatic train control derived from a signaling.

## Patentansprüche

1. Steuerungsverfahren eines Bremssystems mindestens eines Schienenfahrzeugs, das eine Mehrzahl von Verlangsamungsbeeinflussungsmitteln (2) aufweist, mit den Schritten:
- Berechnen einer Verlangsamungsdifferenz zwischen einer Sollverlangsamung und zumindest einer geschätzten effektiven Verlangsamung;
- Auswählen mindestens eines Verlangsamungsbeeinflussungsmittels unter besagter Mehrzahl von Verlangsamungsbeeinflussungsmitteln (2) abhängig von der Verlangsamungsdifferenz und den folgenden Entscheidungsfaktoren:
a) einem Missionsfaktor, der die Tatsache angibt, dass die Sollverlangsamung einer Dienstbremsung oder Notbremsung entspricht, oder dass ein Abschnitt, der durch das Schienenfahrzeug befahren wird, die Verwendung eines bestimmten Verlangsamungsbeeinflussungsmittels (2) verhindert;
b) Vorteils- und Nachteilsfaktoren, die jedem Verlangsamungsbeeinflussungsmittel inhärent sind, die Betriebscharakteristiken, die sowohl positiv als auch negativ sein können, angeben;
c) Feldansprechfaktoren, die die Umgebungsbedingungen, die das mindestens eine Schienenfahrzeug umgeben, angeben;
d) Systemzustandsfaktoren, die den gegenwärtigen Zustand des Bremssystems angeben;
- Steuern des ausgewählten mindestens einen Verlangsamungsbeeinflussungsmittels gemäß der Verlangsamungsdifferenz und den folgenden Entscheidungsfaktoren:
a) einem Missionsfaktor, der die Tatsache angibt, dass die Sollverlangsamung einer Dienstbremsung oder Notbremsung entspricht, oder dass ein Abschnitt, der durch das Schienenfahrzeug befahren wird, die Verwendung eines bestimmten Verlangsamungsbeeinflussungsmittels (2) verhindert;
b) Vorteils- und Nachteilsfaktoren, die jedem Verlangsamungsbeeinflussungsmittel inhärent sind, die positive und negative Betriebscharakteristiken angeben;
c) Feldansprechfaktoren, die die Umgebungsbedingungen, die das mindestens eine Schienenfahrzeug umgeben, angeben;
d) Systemzustandsfaktoren, die den gegenwärtigen Zustand des Bremssystems angeben.

2. Steuerungsverfahren eines Bremssystems mindestens eines Schienenfahrzeugs nach Anspruch 1, bei dem jedes Verlangsamungsbeeinflussungsmittel (2) eine Materialinjektionsvorrichtung, die dazu angepasst ist, den Reibungskoeffizienten zwischen Rad und Schiene zu modifizieren, und/oder eine Bremse, die auf eine Radscheibe oder Achse wirkt, des elektropneumatischen, elektrodynamischen, mechanischen, hydraulischen Typs oder eine Kombination von diesen, und/oder eine Bremse, die auf Räder wirkt, des elektropneumatischen, mechanischen, hydraulischen, und/oder eine Bremse, die auf die Schiene wirkt, und/oder ein Radgleitschutz, WSP, und/oder eine Wirbelstrombremse ist.

3. Steuerungsverfahren eines Bremssystems mindestens eines Schienenfahrzeugs nach einem der vorhergehenden Ansprüche, bei dem der Schritt eines Steuerns des ausgewählten mindestens einen Verlangsamungsbeeinflussungsmittels gemäß der Verlangsamungsdifferenz und mindestens einem besagter Entscheidungsfaktoren die Aktivierung und Deaktivierung des ausgewählten Verlangsamungsbeeinflussungsmittels und/oder die Anpassung der Aktivierungsintensität des ausgewählten Beeinflussungsmittels umfasst.

4. Steuerungsverfahren eines Bremssystems mindestens eines Schienenfahrzeugs nach einem der vorhergehenden Ansprüche, bei dem die geschätzte effektive Verlangsamung durch mindestens ein erstes Sensormittel erfasst und/oder gemäß der Geschwindigkeit mindestens eines Rads des Schienenfahrzeugs, die durch ein zweites Sensormittel erfasst wird, abgeschätzt wird.

5. Steuerungsverfahren eines Bremssystems mindestens eines Schienenfahrzeugs nach Anspruch 4, bei dem das erste Sensormittel ein Beschleunigungsmesser ist und das zweite Sensormittel ein Winkelgeschwindigkeitssensor ist.

6. Steuerungsverfahren eines Bremssystems mindestens eines Schienenfahrzeugs nach einem der vorhergehenden Ansprüche, bei dem mindestens einer besagter Feldansprechfaktoren, die die Umgebungsbedingungen, die das mindestens eine Schienenfahrzeug umgeben, angeben, ein Faktor, der den Haftwert zwischen den Schienenfahrzeugrädern und der Schiene angibt, ist.

7. Steuerungsverfahren eines Bremssystems mindestens eines Schienenfahrzeugs nach einem der vorhergehenden Ansprüche, bei dem mindestens einer besagter Systemzustandsfaktoren, die den gegenwärtigen Zustand des Bremssystems angeben, ein Faktor, der die Bremssystemabnutzung angibt, und/oder ein Faktor, der den gegenwärtigen Aktivierungsgrad jedes Verlangsamungsbeeinflussungsmittels (2) angibt, ist.

8. Steuerungsverfahren eines Bremssystems mindestens eines Schienenfahrzeugs nach einem der vorhergehenden Ansprüche, bei dem die Sollverlangsamung ein Wert, der durch den Fahrer während der Betätigung eines vorbestimmten Bremshebels angegeben wird, oder ein Wert, der einem Befehl entspricht, der durch eine automatische Zugsteuerung, die von einem Signal abgeleitet wird, bereitgestellt wird, ist.

## Revendications

1. Procédé de commande d'un système de freinage d'au moins un véhicule ferroviaire qui comprend une pluralité de moyens influant sur la décélération (2), incluant les étapes consistant à :
- calculer une différence de décélération entre une décélération cible et au moins une décélération effective estimée ;
- sélectionner au moins un moyen influant sur la décélération entre ladite pluralité de moyens influant sur la décélération (2) en fonction de la différence de décélération et des facteurs de décision suivants :
a) un facteur de mission indiquant le fait que la décélération cible corresponde à un freinage de service ou un freinage d'urgence, ou qu'une section parcourue par le véhicule ferroviaire évite l'utilisation d'un moyen influant sur la décélération (2) particulier ;
b) des facteurs d'avantage et de désavantage inhérents à chaque moyen influant sur la décélération, qui indiquent des caractéristiques de fonctionnement qui peuvent être à la fois positives et négatives ;
c) des facteurs de réponse de terrain indiquant les conditions environnementales entourant l'au moins un véhicule ferroviaire ;
d) des facteurs d'état de système indiquant l'état courant du système de freinage ;
- commander l'au moins un moyen influant sur la décélération sélectionné selon la différence de décélération et les facteurs de décision suivants :
a) un facteur de mission indiquant le fait que la décélération cible corresponde à un freinage de service ou un freinage d'urgence, ou qu'une section parcourue par le véhicule ferroviaire évite l'utilisation d'un moyen influant sur la décélération (2) particulier ;
b) des facteurs d'avantage et de désavantage inhérents à chaque moyen influant sur la décélération, qui indiquent des caractéristiques de fonctionnement positives et négatives ;
c) des facteurs de réponse de terrain indiquant les conditions environnementales entourant l'au moins un véhicule ferroviaire ;
d) des facteurs d'état de système indiquant l'état courant du système de freinage.

2. Procédé de commande d'un système de freinage d'au moins un véhicule ferroviaire selon la revendication 1, dans lequel chaque moyen influant sur la décélération (2) est un dispositif d'injection de matériau adapté pour modifier le coefficient de frottement entre une roue et un rail, et/ou un frein agissant sur un disque ou un essieu du type électropneumatique, électrodynamique, mécanique, hydraulique, ou une combinaison de ceux-ci, et/ou un frein agissant sur des roues du électropneumatique, mécanique, hydraulique et/ou un frein agissant sur le rail, et/ou une protection contre le glissement des roues, WSP, et/ou un frein à courants de Foucault.

3. Procédé de commande d'un système de freinage d'au moins un véhicule ferroviaire selon l'une quelconque des revendications précédentes, dans lequel l'étape consistant à commander l'au moins un moyen influant sur la décélération sélectionné selon la différence de décélération et au moins un desdits facteurs de décision comprend l'activation et la désactivation du moyen influant sur la décélération sélectionné et/ou l'ajustement de l'intensité d'activation du moyen influant sélectionné.

4. Procédé de commande d'un système de freinage d'au moins un véhicule ferroviaire selon l'une quelconque des revendications précédentes, dans lequel la décélération effective estimée est détectée par au moins un premier moyen capteur et/ou estimée selon la vitesse d'au moins une roue du véhicule ferroviaire qui est détectée par un second moyen capteur.

5. Procédé de commande d'un système de freinage d'au moins un véhicule ferroviaire selon la revendication 4, dans lequel le premier moyen capteur est un accéléromètre et le second moyen capteur est un capteur de vitesse angulaire.

6. Procédé de commande d'un système de freinage d'au moins un véhicule ferroviaire selon l'une quelconque des revendications précédentes, dans lequel au moins un desdits facteurs de réponse de terrain indiquant les conditions environnementales entourant l'au moins un véhicule ferroviaire est un facteur indiquant la valeur d'adhérence entre les roues de véhicule ferroviaire et le rail.

7. Procédé de commande d'un système de freinage d'au moins un véhicule ferroviaire selon l'une quelconque des revendications précédentes, dans lequel au moins un desdits facteurs d'état de système indiquant l'état courant du système de freinage est un facteur indiquant l'usure de système de freinage et/ou un facteur indiquant le niveau d'activation courant de chaque moyen influant sur la décélération (2).

8. Procédé de commande d'un système de freinage d'au moins un véhicule ferroviaire selon l'une quelconque des revendications précédentes, dans lequel la décélération cible est une valeur donnée par le conducteur par l'intermédiaire de l'actionnement d'un levier de frein prédéterminé ou une valeur correspondant à une instruction fournie par une commande automatique des trains dérivée d'une signalisation.
